# EUROPEAN PATENT APPLICATION

(11) **EP 1 843 617 A2**
(43) Date of publication of application: **10.10.2007**
(21) Application number: 07006965.3
(22) Date of filing: 03.04.2007
(51) Int. Cl.: H04Q 7/38

(54) **Method and system for performing ranging when using multiple channel communication in a wireless network**

(30) Priority: 03.04.2006 US 789200 P; 27.03.2007 US 691942; 02.04.2007 KR 20070032414
(71) Applicant: Samsung Electronics Co., Ltd., Suwon-si, Gyeonggi-Do (KR)
(72) Inventor: Koo, Chang-Hoi, Seohyeon-dong Bundan-gu Seongnam-si, 463-776 (KR); Ji, Baowei, Plano Collin County Texas 75024 (US)
(74) Representative: Grünecker, Kinkeldey, Stockmair & Schwanhäusser Anwaltssozietät

(57) **Abstract**

A method for performing ranging in a base station for a plurality of subscriber stations using multiple channel communication is provided. The method includes, for each subscriber station, maintaining a base station timer for each channel on which the subscriber station is operable to communicate and timely assigning a transmission opportunity for the subscriber station on a channel when the base station timer for the channel expires.

## Description

### CROSS-REFERENCE TO RELATED APPLICATIONS AND CLAIM OF PRIORITY

The present application is related to U.S. Provisional Patent No. 60/789,200, filed April 3, 2006, titled "Periodic Channel Ranging in DFH Framework." U.S. Provisional Patent No. 60/789,200 is assigned to the assignee of the present application and is hereby incorporated by reference into the present disclosure as if fully set forth herein. The present application hereby claims priority under 35 U.S.C. §119(e) to U.S. Provisional Patent No. 60/789,200.

### TECHNICAL FIELD OF THE INVENTION

The present application relates generally to wireless communication networks and, more specifically, to a method and system for performing ranging when using multiple channel communication in a wireless network.

### BACKGROUND OF THE INVENTION

Orthogonal frequency division multiplexing (OFDM) is a multi-carrier transmission technique in which a user transmits on many orthogonal frequencies (or subcarriers). The orthogonal subcarriers are individually modulated and separated in frequency such that they do not interfere with one another. An orthogonal frequency division multiple access (OFDMA) system allows some subcarriers to be assigned to different subscriber stations, rather than to a single subscriber station. Today, OFDM and OFDMA technology are used in both wireline transmission systems, such as asymmetric digital subscriber line (ADSL), and wireless transmission systems, such as IEEE-802.11a/g (i.e., WiFi), IEEE-802.16 (e.g., WiMAX), digital audio broadcast (DAB), and digital video broadcast (DVB). This technology is also used for wireless digital audio and video broadcasting.

In conventional OFDMA networks, periodic channel ranging is performed by the base stations and subscriber stations in order to maintain the quality of the wireless communication link between them. The periodic channel ranging methods proposed in IEEE-802.16d/e provide for channel maintenance for a single channel of communication between a base station and subscriber stations. However, multiple channels are used with for a variety of multiple channel communication scenarios, such as dynamic frequency hopping, channel aggregation, and other multi-carrier cases. When multiple channels of communication are used between a base station and subscriber stations, channel conditions should be maintained for each of the channels. Therefore, there is a need in the art for a method for performing ranging when using multiple channel communication in a wireless network.

### SUMMARY OF THE INVENTION

A method for performing ranging in a base station for a plurality of subscriber stations when using multiple channel communication is provided. According to an advantageous embodiment of the present disclosure, the method includes, for each subscriber station, maintaining a base station timer for each channel on which the subscriber station is operable to communicate and assigning a transmission opportunity for the subscriber station on a channel when the base station timer for the channel expires.

According to another embodiment of the present disclosure, a method for performing ranging in a subscriber station using multiple channel communication is provided that includes maintaining a subscriber station timer for each channel on which the subscriber station is operable to communicate. A determination is made regarding whether a subscriber station timer for one of the channels has expired. When the subscriber station timer for a specified channel has expired, a re-initialization or periodic ranging request is transmitted to a base station for the specified channel.

According to yet another embodiment of the present disclosure, a base station capable of performing ranging for a plurality of subscriber stations using multiple channel communication is provided that includes a plurality of base station timers for each subscriber station and a base station ranging module coupled to the base station timers. Each base station timer for a subscriber station corresponds to a channel on which the subscriber station is operable to communicate. The base station ranging module is operable to assign a transmission opportunity for the subscriber station on a specified channel when the base station timer for the specified channel expires.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or" is inclusive, meaning and/or; the term "each" means every one of at least a subset of the identified items; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates a wireless network capable of providing ranging when multiple channel communication is used according to one embodiment of the disclosure;

FIGURE 2 illustrates a base station that is capable of performing ranging when multiple channel communication is used according to an embodiment of the present disclosure;

FIGURE 3 illustrates a subscriber station that is capable of performing ranging when using multiple channel communication according to an embodiment of the present disclosure;

FIGURES 4A-B illustrate parameters for performing ranging when multiple channel communication is used for the base station of FIGURE 2 and the subscriber station of FIGURE 3 according to two embodiments of the disclosure;

FIGURE 5 is a flow diagram illustrating a method for performing ranging when multiple channel communication is used from the perspective of the base station of FIGURE 2 according to an embodiment of the disclosure; and

FIGURE 6 is a flow diagram illustrating a method for performing ranging when multiple channel communication is used from the perspective of the subscriber station of FIGURE 3 according to an embodiment of the disclosure.

### DETAILED DESCRIPTION OF THE INVENTION

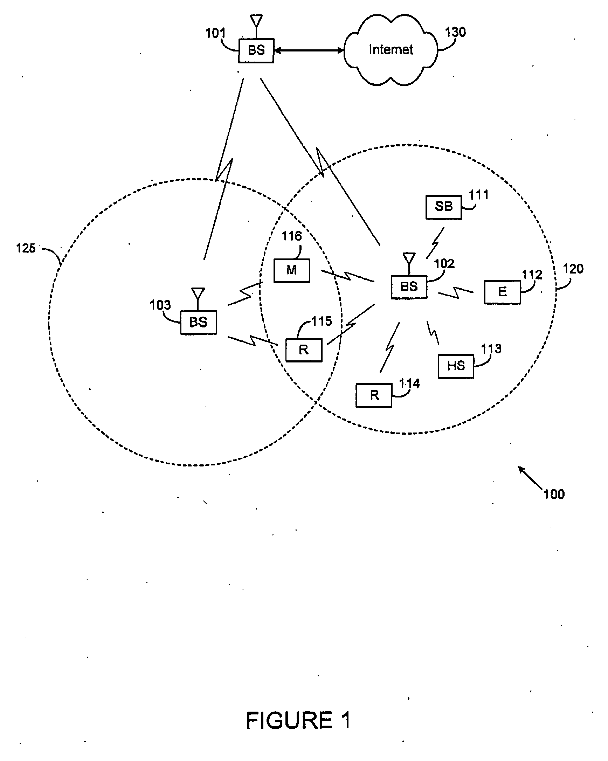

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless network.

FIGURE 1 illustrates a wireless network 100 capable of performing ranging when multiple channel communication, such as dynamic frequency hopping, channel aggregation or other multi-carrier communication, is used according to one embodiment of the disclosure. In the illustrated embodiment, wireless network 100 includes base station (BS) 101, base station (BS) 102, and base station (BS) 103. Base station 101 communicates with base station 102 and base station 103. Base station 101 also communicates with Internet protocol (IP) network 130, such as the Internet, a proprietary IP network, or other data network.

Base station 102 provides wireless broadband access to network 130, via base station 101, to a first plurality of subscriber stations within coverage area 120 of base station 102. The first plurality of subscriber stations includes subscriber station 111, subscriber station 112, subscriber station 113, subscriber station 114, subscriber station 115 and subscriber station 116. In an exemplary embodiment, subscriber station 111 may be located in a small business (SB), subscriber station 112 may be located in an enterprise (E), subscriber station 113 may be located in a WiFi hotspot (HS), subscriber station 114 may be located in a first residence, subscriber station 115 may be located in a second residence, and subscriber station 116 may be a mobile (M) device.

Base station 103 provides wireless broadband access to network 130, via base station 101, to a second plurality of subscriber stations within coverage area 125 of base station 103. The second plurality of subscriber stations includes subscriber station 115 and subscriber station 116. In alternate embodiments, base stations 102 and 103 may be connected directly to the Internet by means of a wired broadband connection, such as an optical fiber, DSL, cable or T1/E1 line, rather than indirectly through base station 101.

In other embodiments, base station 101 may be in communication with either fewer or more base stations. Furthermore, while only six subscriber stations are shown in FIGURE 1, it is understood that wireless network 100 may provide wireless broadband access to more than six subscriber stations. It is noted that subscriber station 115 and subscriber station 116 are on the edge of both coverage area 120 and coverage area 125. Subscriber station 115 and subscriber station 116 each communicate with both base station 102 and base station 103 and may be said to be operating in handoff mode, as known to those of skill in the art.

In an exemplary embodiment, base stations 101-103 may communicate with each other and with subscriber stations 111-116 using an IEEE802.22 wireless regional area network (WRAN). In another embodiment, the protocol may be an IEEE-802.16 wireless metropolitan area network standard, such as, for example, an IEEE-802.16e standard. In yet another embodiment, however, a different wireless protocol may be employed, such as, for example, a HIPERMAN wireless metropolitan area network standard. Base station 101 may communicate through direct line-of-sight or non-line-of-sight with base station 102 and base station 103, depending on the technology used for the wireless backhaul. Base station 102 and base station 103 may each communicate through non-line-of-sight with subscriber stations 111-116 using OFDM and/or OFDMA techniques.

Base station 102 may provide a T1 level service to subscriber station 112 associated with the enterprise and a fractional T1 level service to subscriber station 111 associated with the small business. Base station 102 may provide wireless backhaul for subscriber station 113 associated with the WiFi hotspot, which may be located in an airport, café, hotel, or college campus. Base station 102 may provide digital subscriber line (DSL) level service to subscriber stations 114, 115 and 116.

Subscriber stations 111-116 may use the broadband access to network 130 to access voice, data, video, video teleconferencing, and/or other broadband services. In an exemplary embodiment, one or more of subscriber stations 111-116 may be associated with an access point (AP) of a WiFi WLAN. Subscriber station 116 may be any of a number of mobile devices, including a wireless-enabled laptop computer, personal data assistant, notebook, handheld device, or other wireless-enabled device. Subscriber stations 114 and 115 may be, for example, a wireless-enabled personal computer, a laptop computer, a gateway, or another device.

Dotted lines show the approximate extents of coverage areas 120 and 125, which are shown as approximately circular for the purposes of illustration and explanation only. It should be clearly understood that the coverage areas associated with base stations, for example, coverage areas 120 and 125, may have other shapes, including irregular shapes, depending upon the configuration of the base stations and variations in the radio environment associated with natural and man-made obstructions.

Also, the coverage areas associated with base stations are not constant over time and may be dynamic (expanding or contracting or changing shape) based on changing transmission power levels of the base station and/or the subscriber stations, weather conditions, and other factors. In an embodiment, the radius of the coverage areas of the base stations, for example, coverage areas 120 and 125 of base stations 102 and 103, may extend in the range from less than 2 kilometers to about fifty kilometers from the base stations.

As is well known in the art, a base station, such as base station 101, 102, or 103, may employ directional antennas to support a plurality of sectors within the coverage area. In FIGURE 1, base stations 102 and 103 are depicted approximately in the center of coverage areas 120 and 125, respectively. In other embodiments, the use of directional antennas may locate the base station near the edge of the coverage area, for example, at the point of a cone-shaped or pear-shaped coverage area.

The connection to network 130 from base station 101 may comprise a broadband connection, for example, a fiber optic line, to servers located in a central office or another operating company point-of-presence. The servers may provide communication to an Internet gateway for internet protocol-based communications and to a public switched telephone network gateway for voice-based communications. In the case of voice-based communications in the form of voice-over-IP (VoIP), the traffic may be forwarded directly to the Internet gateway instead of the PSTN gateway. The servers, Internet gateway, and public switched telephone network gateway are not shown in FIGURE 1. In another embodiment, the connection to network 130 may be provided by different network nodes and equipment.

As described in more detail below, base stations 101-103 and subscriber stations 111-116 may be operable to perform periodic channel ranging in order to maintain the quality of the wireless communication links between them. For subscriber stations 111-116 using a single channel to communicate with a base station 101-103, this ranging may be performed in accordance with IEEE-802.16. However, for subscriber stations 111-116 using multiple channel communication, such as dynamic frequency hopping (DFH) or the like, to communicate with a base station 101-103 on multiple channels, this ranging may be performed for each subscriber station 111-116 for each channel on which the subscriber station 111-116 may communicate, as described in more detail below.

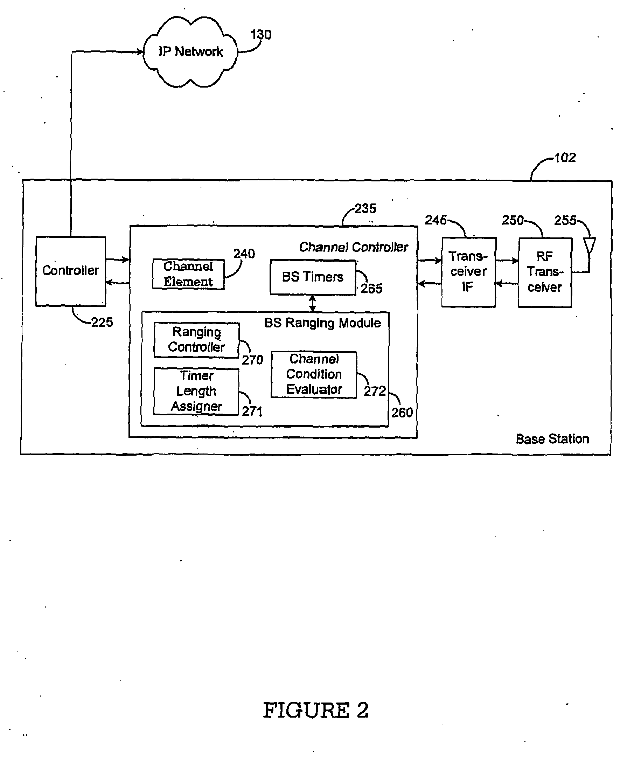

FIGURE 2 illustrates base station 102 in greater detail according to one embodiment of the present disclosure. Base station 102 is illustrated by way of example only. However, it will be understood that the components illustrated and described with respect to base station 102 are also part of base stations 101 and 103. In one embodiment, base station 102 comprises controller 225, channel controller 235, transceiver interface (IF) 245, radio frequency (RF) transceiver unit 250, and antenna array 255.

Controller 225 comprises processing circuitry and memory capable of executing an operating program that controls the overall operation of base station 102. In an embodiment, controller 225 may be operable to communicate with network 130. Under normal conditions, controller 225 directs the operation of channel controller 235, which comprises a number of channel elements, such as exemplary channel element 240, each of which performs bidirectional communication in the forward channel and the reverse channel. A forward channel (or downlink) refers to outbound signals from base station 102 to subscriber stations 111-116. A reverse channel (or uplink) refers to inbound signals from subscriber stations 111-116 to base station 102. Channel element 240 also preferably performs all baseband processing, including processing any digitized received signal to extract the information or data bits conveyed in the received signal, typically including demodulation, decoding, and error correction operations, as known to those of skill in the art. Transceiver IF 245 transfers bidirectional channel signals between channel controller 235 and RF transceiver unit 250.

Antenna array 255 transmits forward channel signals received from RF transceiver unit 250 to subscriber stations 111-116 in the coverage area of base station 102. Antenna array 255 is also operable to send to RF transceiver unit 250 reverse channel signals received from subscriber stations 111-116 in the coverage area of the base station 102. According to one embodiment of the present disclosure, antenna array 255 comprises a multi-sector antenna, such as a three-sector antenna in which each antenna sector is responsible for transmitting and receiving in a coverage area corresponding to an arc of approximately 120 degrees. Additionally, RF transceiver unit 250 may comprise an antenna selection unit to select among different antennas in antenna array 255 during both transmit and receive operations.

In accordance with an embodiment of the present disclosure, channel controller 235 may comprise BS ranging module 260 and BS timers 265. BS ranging module 260 comprises ranging controller 270, timer length assigner 271 and channel condition evaluator 272. Although illustrated and described as separate components, it will be understood that any two or all of ranging controller 270, timer length assigner 271 and channel condition evaluator 272 may be implemented together as a single component.

BS ranging module 260 is operable to provide ranging for multiple channel communication (MCC) subscriber stations 111-116 in base station's 102 coverage area. As used herein, an "MCC subscriber station" means a subscriber station that is using multiple channel communication, such as DFH or the like, to communicate with base station 102 over multiple channels. For each MCC subscriber station 111-116, the ranging is provided by BS ranging module 260 based on a periodic ranging timer for each channel over which the MCC subscriber station 111-116 may communicate with base station 102. Each channel may use a different timer length because of different channel association times and because of different transmission activities. The timers for each of the MCC subscriber stations 111-116 are illustrated and described together as BS timers 265. Thus, BS timers 265 represents a plurality of timers for each of a plurality of MCC subscriber stations 111-116.

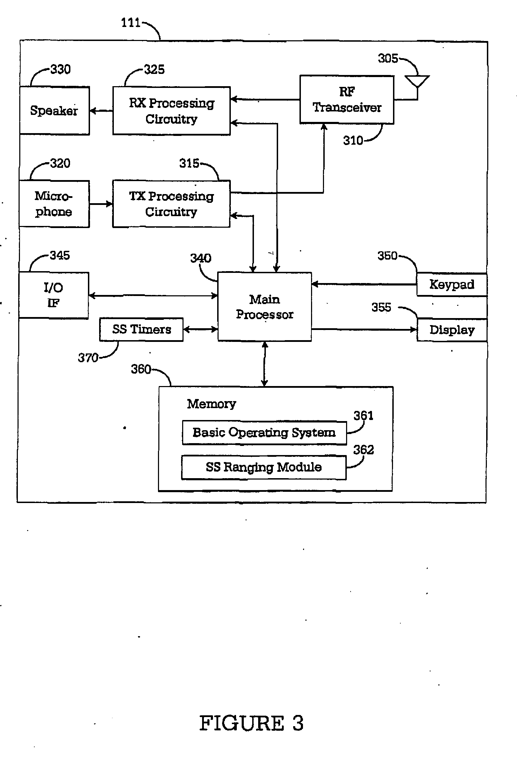

For one embodiment, ranging controller 270 is operable to monitor and control periodic ranging based on BS timers 265, each of which may expire based on one of two timer lengths. A normal timer length may be used when the channel condition for the corresponding channel is acceptable, and an urgent timer length may be used when the channel condition for the corresponding channel is unacceptable. As described in more detail below, the lengths of each of the BS timers 265 may be assigned by timer length assigner 271. Channel condition evaluator 272 is operable to evaluate the channel condition for each channel so that ranging controller 270 may provide to BS timers 265 the appropriate one of the timer lengths assigned by timer length assigner 271. When the BS timer 265 for a channel expires, ranging controller 270 is operable to schedule a dedicated ranging transmission opportunity for the MCC subscriber station 111-116 when the channel is available. As described in more detail below, each MCC subscriber station 111-116 also maintains a contention-based ranging procedure for recovery from an abnormality when that MCC subscriber station 111-116 is not given a ranging transmission opportunity within a specified time limit. In that regard, as described below in connection with FIGURE 3, timer length assigner 271 is also operable to assign the timer length for the SS timers 370 of FIGURE 3, though the SS timers 370 are operated by the subscriber station 111.

For another embodiment, also described in more detail below, periodic ranging may be initiated by each MCC subscriber station 111-116. For this embodiment, base station 102 may take advantage of the uplink transmissions fromMCC subscriber stations 111-116 and direct an MCC subscriber station 111-116 to perform ranging as soon as possible if channel conditions are unacceptable.

FIGURE 3 illustrates wireless subscriber station 111 according to an advantageous embodiment of the present disclosure. Wireless subscriber station 111 comprises antenna 305, radio frequency (RF) transceiver 310, transmit (TX) processing circuitry 315, microphone 320, and receive (RX) processing circuitry 325. MS 111 also comprises speaker 330, main processor 340, input/output (I/O) interface (IF) 345, keypad 350, display 355, memory 360, and subscriber station (SS) timers 370. Memory 360 further comprises basic operating system (OS) program 361 and SS ranging module 362.

Radio frequency (RF) transceiver 310 receives from antenna 305 an incoming RF signal transmitted by a base station of wireless network 100. Radio frequency (RF) transceiver 310 down-converts the incoming RF signal to produce an intermediate frequency (IF) or a baseband signal. The IF or baseband signal is sent to receiver (RX) processing circuitry 325, which produces a processed baseband signal by filtering, digitizing the baseband or IF signal, additional filtering, if necessary, demodulation and/or decoding. Receiver (RX) processing circuitry 325 transmits the processed baseband signal to speaker 330 (i.e., voice data) or to main processor 340 for further processing (e.g., web browsing).

Transmitter (TX) processing circuitry 315 receives analog or digital voice data from microphone 320 or other outgoing baseband data (e.g., web data, e-mail, interactive video game data) from main processor 340. Transmitter (TX) processing circuitry 315 encodes, modulates, multiplexes, and/or digitizes the outgoing baseband data to produce a processed baseband or IF signal. Radio frequency (RF) transceiver 310 receives the outgoing processed baseband or IF signal from transmitter (TX) processing circuitry 315. Radio frequency (RF) transceiver 310 up-converts the baseband or IF signal to a radio frequency (RF) signal that is transmitted via antenna 305.

In an advantageous embodiment of the present disclosure, main processor 340 is a microprocessor or microcontroller. Memory 360 is coupled to main processor 340. According to an advantageous embodiment of the present disclosure, part of memory 360 comprises a random access memory (RAM) and another part of memory 360 comprises a non-volatile memory, such as Flash memory, which acts as a read-only memory (ROM).

Main processor 340 executes basic operating system (OS) program 361 stored in memory 360 in order to control the overall operation of wireless subscriber station 111. In one such operation, main processor 340 controls the reception of forward channel signals and the transmission of reverse channel signals by radio frequency (RF) transceiver 310, receiver (RX) processing circuitry 325, and transmitter (TX) processing circuitry 315, in accordance with well-known principles.

Main processor 340 is capable of executing other processes and programs resident in memory 360. Main processor 340 can move data into or out of memory 360, as required by an executing process. Main processor 340 is also coupled to I/O interface 345. I/O interface 345 provides subscriber station 111 with the ability to connect to other devices such as laptop computers and handheld computers. I/O interface 345 is the communication path between these accessories and main controller 340.

Main processor 340 is also coupled to keypad 350 and display unit 355. The operator of subscriber station 111 uses keypad 350 to enter data into subscriber station 111. Display 355 may be a liquid crystal display capable of rendering text and/or at least limited graphics from web sites. Alternate embodiments may use other types of displays.

Main processor 340 is also operable to execute SS ranging module 362 stored in memory 360 in order to control the operation of ranging procedures for subscriber station 111. In order to perform a ranging procedure, main processor 340 is coupled to SS timers 370, which comprise a plurality of periodic ranging timers. SS timers 370 include a ranging timer for each channel on which subscriber station 111 may communicate during dynamic frequency hopping or other suitable type of multiple channel communication.

SS ranging module 362 is operable to set an SS timer 370 for each channel on which MCC subscriber station 111 may communicate based on an initialization ranging procedure performed by base station 102. Thus, timer length assigner 271 may assign lengths for each of the SS timers 370. SS ranging module 362 is also operable to receive an unsolicited ranging response message from base station 102 and to adjust channel parameters as directed by the ranging response message.

Each time the MCC subscriber station 111 transmits an uplink burst as directed by base station 102, SS ranging module 362 is operable to reset the SS timer 370 corresponding to that channel. If the SS timer 370 for a channel expires, SS ranging module 362 is operable to request a periodic or re-initialization ranging procedure, which is a contention-based ranging procedure similar to the initialization ranging procedure for that channel except that the channel is already assigned a pair of primary and secondary connection identifiers. After the re-initialization ranging procedure is finished, SS ranging module 362 is operable to reset the SS timer 370 for that channel.

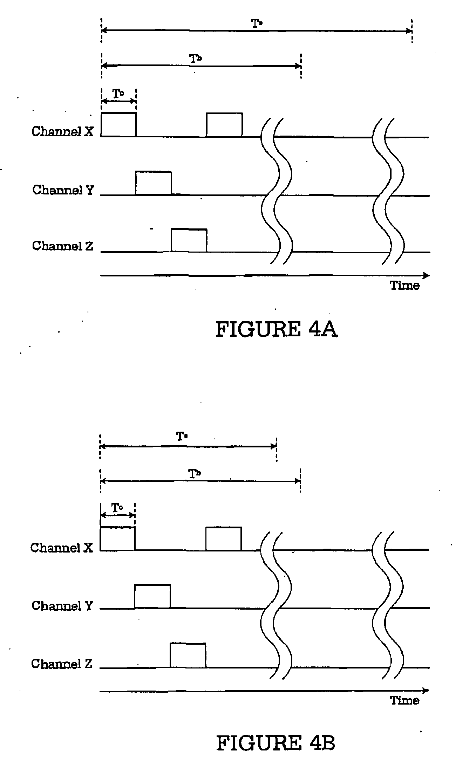

FIGURES 4A-B illustrate parameters for performing ranging when using multiple channel communication according to two embodiments of the disclosure. FIGURE 4A corresponds to BS-initiated periodic ranging, and FIGURE 4B corresponds to SS-initiated periodic ranging.

For both embodiments, a channel occupation time (Tₒ) is the time the MCC subscriber station 111-116 dwells on a particular channel each time the channel is available. A channel may be used periodically or occasionally, according to a defined channel hopping pattern. The value of Tₒ may be multiple OFDMA frames, multiple WRAN superframes, or any other suitable length. For the current functional requirements of IEEE-802.22, the value of Tₒ may be no more than two seconds for the protection of incumbents such as TV receivers. In addition, for both embodiments, a BS periodic ranging period (T_{b}) is defined for the BS timer 265 for each channel for each MCC subscriber station 111-116. Similarly, an MCC subscriber station ranging period (Tₛ) is defined for the SS timer 370 for each MCC subscriber station 111-116 for each channel.

For the BS-initiated periodic ranging corresponding to FIGURE 4A, the value of Tₛ may be up to 30 seconds (as examined in 802.16e) or other suitable value, and the value of T_{b} is less than that of Tₛ in order to periodically maintain acceptable channel ranging accuracy by primarily using BS-initiated ranging. Note that Tₛ is used here for a subscriber station 111-116 to re-initiate ranging in the abnormal situation when the subscriber station 111-116 has not received any ranging opportunities from the BS 102 for an amount of time defined by Tₛ. However, for the SS-initiated periodic ranging corresponding to FIGURE 4B, the value of Tₛ may be limited to a small enough value such that the MCC subscriber station 111-116 primarily initiates periodic ranging. Thus, for this embodiment, Tₛ is less than T_{b}. This embodiment may be implemented, for example, in situations in which the probability of ranging collision is acceptably low.

In both embodiments, base station 102 may take advantage of uplink bursts from MCC subscriber stations 111-116 for the purpose of evaluating the channel deviation. As a result, T_{b} may be further differentiated as T_{b,U} ('U' meaning urgent) when the current channel is unacceptable and as T_{b,N} ('N' meaning normal) when the channel is acceptable. The value of T_{b,U} is shorter than T_{b,N}. Therefore, a ranging transmission opportunity may be assigned to the MCC subscriber station 111-116 as soon as possible if the channel condition is unacceptable, whereas ranging may be done regularly if the channel condition is acceptable.

As described above in connection with FIGURE 2, the BS timer 265 for a particular channel and MCC subscriber station 111-116 that is assigned one of the two timer lengths of T_{b,U} and T_{b,N} may physically be a single timer. Based on the channel condition determined by channel condition evaluator 272, ranging controller 270 may provide the length of T_{b,U} or the length of T_{b,N} for use by the corresponding BS timer 265.

In operation for one embodiment of the BS-initiated ranging approach, ranging controller 270 participates in an initialization ranging procedure with an MCC subscriber station, such as subscriber station 111, and the MCC subscriber station 111 is successfully associated with base station 102. Timer length assigner 271 then assigns the MCC subscriber station 111 standard values for the BS periodic ranging period (i.e., T_{b}) for each channel on which the MCC subscriber station 111 may communicate. For one particular example, timer length assigner 271 may assign a length of six seconds for T_{b,N} and a length of 20 milliseconds for T_{b,U}.

Timer length assigner 271 may then adjust any or all of the BS timers 265 for the MCC subscriber station 111 based on an existing frequency-hopping pattern for the MCC subscriber station 111. For example, the length of a BS timer 265 for Channel X (i.e., T_{bX,U} and T_{bX,N}) may be reduced such that, after expiration, enough time remains for base station 102 to schedule a ranging transmission opportunity for that MCC subscriber station 111 at Channel X when Channel X is next hopped over (in case the current operation channel is not Channel X). In addition, the BS timer 265 for Channel X may be kept above a minimum length in order to take into account the ranging response processing time for the MCC subscriber station 111 (e.g., about ten milliseconds for one embodiment).

Generally, given the frequency-hopping pattern for an MCC subscriber station 111, the amount of time to shorten the BS timer 265 may be determined relatively easily by timer length assigner 271. For one particular example, using the embodiment illustrated in FIGURE 4A, the BS timer 265 may be shortened from the original value by at least 3xTₒ. In addition, for one embodiment, ranging controller 270 may adjust the lengths of any of the BS timers 265 at any time based on the channel variation pattern of the corresponding MCC subscriber station 111.

When base station 102 assigns a transmission opportunity (TXOP) for an MCC subscriber station 111 at a particular channel, ranging controller 270 also resets the length of the BS timer 265 for that channel to T_{b,N}. Having scheduled the transmission opportunity for the MCC subscriber station 111, base station 102 receives a transmission from the MCC subscriber station 111. (If base station 102 fails to receive a transmission, MCC subscriber station 111 may take steps to re-initialize with base station 102, as described in more detail below.)

Based on the received transmission, channel condition evaluator 272 evaluates the deviation of the MCC subscriber station's 111 channel condition. If the channel condition is unacceptable (i.e., showing significant deviation from the last ranging results), ranging controller 270 transmits an unsolicited ranging response message from base station 102 to the MCC subscriber station 111, directing the MCC subscriber station 111 to adjust the channel access parameters of the channel being used. Ranging controller 270 also resets the length of the BS timer 265 for the channel to T_{b,U} such that the BS timer 265 will expire more quickly, triggering the assignment of a ranging transmission opportunity for the MCC subscriber station 111 for that channel. On the other hand, if the channel is acceptable, no ranging action is taken. If a channel is discarded, ranging controller 270 may readjust the BS timers 265 and the SS timers 370 for the MCC subscriber station 111 based on an updated frequency-hopping pattern.

Thus, when a BS timer 265 for a particular channel (e.g., Channel X) for an MCC subscriber station 111 expires, ranging controller 270 schedules a ranging opportunity immediately (if possible) if Channel X is being used at present. Otherwise, a ranging opportunity is scheduled the next time the MCC subscriber station 111 hops to Channel X. Having finished this round of ranging for that channel, ranging controller 270 restarts the BS timer 265 for the channel.

When the MCC subscriber station 111 receives an unsolicited ranging response message, SS ranging module 362 adjusts the channel parameters as directed by the ranging response message and sends a ranging message in the dedicated transmission opportunity until this round of ranging is completed.

During the initialization ranging procedure for the MCC subscriber station 111, timer length assigner 271 also assigns a length for the SS timers 370 for each channel on which MCC subscriber station 111 may communicate. Timer length assigner 271 assigns the lengths of these timers 370 based on the frequency-hopping pattern of the MCC subscriber station 111.

Each time the MCC subscriber station 111 transmits an uplink burst as directed by base station 102, SS ranging module 362 resets the SS timer 370 corresponding to that channel. If the SS timer 370 for a channel expires, it may be assumed that the MCC subscriber station 111 has not communicated with base station 102 in that channel for such a long time that the channel needs a fresh adjustment. Thus, the MCC subscriber station 111 requests a re-initialization ranging procedure, which is a contention-based ranging procedure similar to the initialization ranging procedure for that channel except that the channel is already assigned a pair of primary and secondary connection identifiers. When this round of ranging is finished, SS ranging module 362 resets the SS timer 370 for that channel.

The ranging described above corresponds to the parameters illustrated in FIGURE 4A in which ranging is primarily initiated by base station 102 because the SS timer 370 for a channel is much longer than the BS timer 265 for that channel. This generally results in a scheduled periodic ranging with the advantages of avoiding the potential collisions in the contention-based ranging that happens when the SS timer 370 expires. However, when there is a low probability of collision due to a small number of subscriber stations 111-116 and/or a larger allowable interval from one ranging event to the next necessary ranging event, the MCC subscriber station 111 may primarily be used to initiate periodic ranging.

For one embodiment of this SS-initiated ranging approach, the ranging is performed as described above for the BS-initiated approach. However, the SS timer 370 for this embodiment is much shorter than the corresponding BS timer 265, as illustrated in FIGURE 4B. As a result, the periodic ranging is generally performed based on the ranging procedure that is triggered by the expiration of the SS timer 370, as described above.

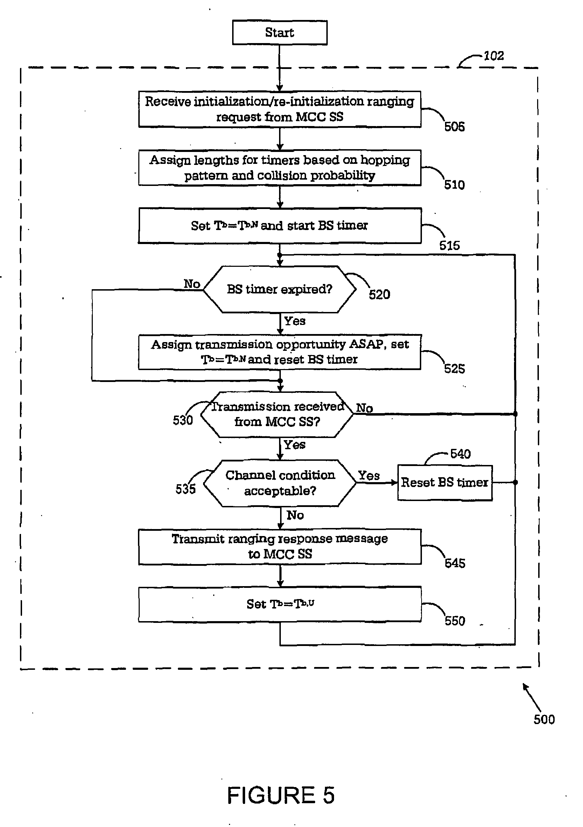

FIGURE 5 is a flow diagram illustrating a method 500 for performing ranging when using multiple channel communication from the perspective of the base station 102 according to an embodiment of the disclosure. Initially, BS ranging module 260 receives an initialization or re-initialization ranging request from an MCC subscriber station, such as subscriber station 111 (process step 505). Timer length assigner 271 assigns lengths for the BS timers 265 and the SS timers 370 based on the frequency-hopping pattern for the MCC subscriber station 111 and possibly based on a collision probability (process step 510). For example, when the collision probability is high, timer length assigner 271 may assign timers based on the BS-initiated ranging approach illustrated in FIGURE 4A. Similarly, when the collision probability is low, timer length assigner 271 may assign timers based on the SS-initiated ranging approach illustrated in FIGURE 4B.

The remaining steps are described below with respect to one particular channel. However, it will be understood that these steps are performed for each channel on which the MCC subscriber station 111 may communicate.

Ranging controller 270 sets the length of the BS timer 265 for the channel to T_{b,N} and starts the BS timer 265 (process step 515). Ranging controller 270 then waits until the BS timer 265 expires (process step 520) or a transmission is received from the MCC subscriber station 111 (process step 530).

If the BS timer 265 for the channel expires (process step 520), ranging controller 270 assigns a transmission opportunity as soon as possible, sets the length of the BS timer 265 for the channel to T_{b,N} and resets the BS timer 265 (process step 525). Thus, if the MCC subscriber station 111 is currently using the channel, ranging controller 270 may assign a transmission opportunity immediately. However, if the MCC subscriber station 111 is not currently using the channel, ranging controller 270 may assign a transmission opportunity for the next time the MCC subscriber station 111 communicates on that channel.

If a transmission is received from the MCC subscriber station 111 (process step 530), channel condition evaluator 272 evaluates the condition of the channel based on the received transmission to determine whether the channel condition is acceptable (process step 535). If the channel condition is acceptable (process step 535), ranging controller 270 resets the BS timer 265 for the channel (process step 540) and returns to waiting for the BS timer 265 to expire (process step 520) or for a transmission to be received from the MCC subscriber station 111 (process step 530).

However, if the channel condition is unacceptable (process step 535), ranging controller 270 transmits a ranging response message to the MCC subscriber station 111 (process step 545) to trigger the MCC subscriber station 111 to perform a ranging procedure. Ranging controller 270 also sets the length of the BS timer 265 for the channel to T_{b,U} before returning to wait for the BS timer 265 to expire (process step 520) or for a transmission to be received from the MCC subscriber station 111 (process step 530).

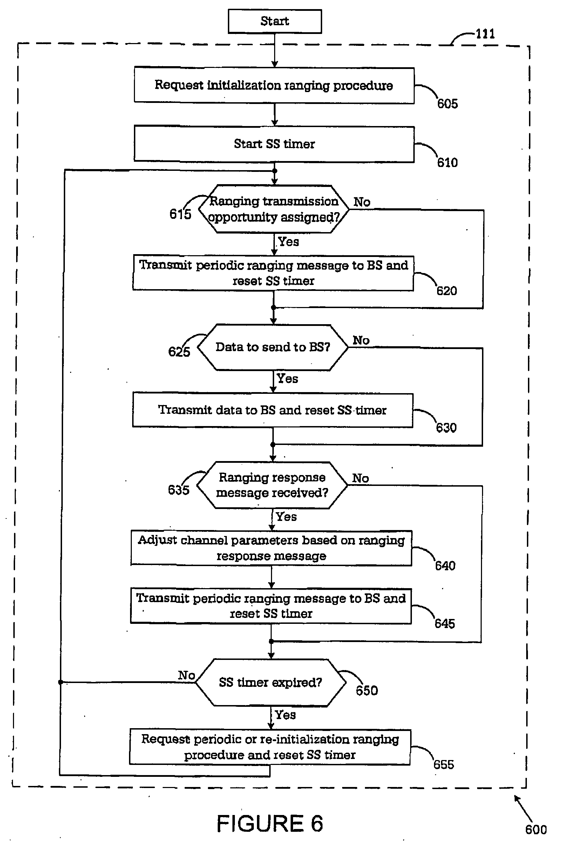

FIGURE 6 is a flow diagram illustrating a method 600 for performing ranging when using multiple channel communication from the perspective of the subscriber station 111 according to an embodiment of the disclosure. Initially, SS ranging module 362 requests an initialization ranging procedure with base station 102 (process step 605).

The remaining steps are described below with respect to one particular channel. However, it will be understood that these steps are performed for each channel on which the MCC subscriber station 111 may communicate.

SS ranging module 362 starts the SS timer 370 for the channel (process step 610). SS ranging module 362 then waits for the assignment of a periodic ranging opportunity by base station 102 (process step 615), data to be transmitted to base station 102 (process step 625), the receipt of a ranging response message from base station 102 (process step 635), and the expiration of the SS timer 370 for the channel (process step 650) .

If a transmission opportunity is assigned to the MCC subscriber station 111 by base station 102 (process step 615), SS ranging module 362 transmits a periodic ranging message to base station 102 and resets the SS timer 370 for the channel (process step 620).

If the MCC subscriber station 111 has data to send to base station 102 (process step 625), the MCC subscriber station 111 transmits the data to base station 102 and SS ranging module 362 resets the SS timer for the channel (process step 630).

If a ranging response message is received from base station 102 (process step 635), SS ranging module 362 adjusts the channel parameters for the channel based on the ranging response message (process step 640). SS ranging module 362 then transmits a periodic ranging message to base station 102 and resets the SS timer 370 for the channel (process step 645).

If the SS timer 370 for the channel expires (process step 650), SS ranging module 362 requests a periodic (as in FIGURE 4B) or re-initialization (as in FIGURE 4A) ranging procedure with base station 102 and resets the SS timer 370 for the channel (process step 655).

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for performing ranging in a base station for a plurality of subscriber stations using multiple channel communication, comprising, for each subscriber station:
maintaining a base station timer for each channel on which the subscriber station is operable to communicate; and
assigning a transmission opportunity for the subscriber station on a channel when the base station timer for the channel expires.

2. The method as set forth in Claim 1, further comprising, for each subscriber station:
receiving a transmission from the subscriber station on the channel; and
evaluating a channel condition of the channel to determine whether the channel condition is acceptable.

3. The method as set forth in Claim 2, further comprising, for each subscriber station, resetting the base station timer for the channel when the channel condition is acceptable.

4. The method as set forth in Claim 2, further comprising, for each subscriber station, transmitting a ranging response message to the subscriber station when the channel condition is unacceptable.

5. The method as set forth in Claim 4, further comprising, for each subscriber station, resetting a length of the base station timer for the channel from a normal timer length to an urgent timer length when the channel condition is unacceptable.

6. The method as set forth in Claim 1, further comprising, for each subscriber station, assigning a normal timer length and an urgent timer length to each base station timer based on a pattern for frequency hopping for the subscriber station.

7. The method as set forth in Claim 1, further comprising, for each subscriber station, assigning a timer length for each of a plurality of subscriber station timers, the subscriber station timers maintained by the subscriber station, each channel on which the subscriber station is operable to communicate having a corresponding subscriber station timer.

8. The method as set forth in Claim 7, assigning the timer length for each of the subscriber station timers comprising assigning the timer length for each of the subscriber station timers based on a collision probability for the subscriber station.

9. The method as set forth in Claim 1, further comprising,
the channel sensing for obtaining or updating a frequency hopping pattern; and
setting the timer length for each of the base station timers based on the frequency hopping pattern and starting the corresponding base station timers.

10. A method for performing ranging in a subscriber station using multiple channel communication, comprising:
maintaining a subscriber station timer for each channel on which the subscriber station is operable to communicate;
determining whether a subscriber station timer for one of the channels has expired; and
when the subscriber station timer for a specified channel has expired, transmitting a re-initialization ranging request to a base station for the specified channel.

11. The method as set forth in Claim 10, further comprising:
determining whether a transmission opportunity has been assigned to the subscriber station for one of the channels; and
when the transmission opportunity has been assigned to the subscriber station for a specified channel, transmitting a periodic ranging message to the base station on the specified channel and resetting the subscriber station timer for the specified channel.

12. The method as set forth in Claim 10, further comprising:
determining whether the subscriber station has data to transmit to the base station on one of the channels; and
when the subscriber station has data to transmit to the base station on a specified channel, transmitting data to the base station on the specified channel and resetting the subscriber station timer for the specified channel.

13. The method as set forth in Claim 10, further comprising:
determining whether a ranging response message has been received from the base station for one of the channels; and
when the ranging response message has been received from the base station for a specified channel, adjusting parameters for the specified channel based on the ranging response message, transmitting a periodic ranging message to the base station on the specified channel, and resetting the subscriber station timer for the specified channel.

14. The method as set forth in Claim 10, further comprising:
being allocated a idle channel through a channel sensing; and
obtaining ranging periodic of the corresponding subscriber station for the idle channel and starting the subscriber station timer.

15. A base station capable of performing ranging for a plurality of subscriber stations using multiple channel communication, comprising:
a plurality of base station timers for each subscriber station, each base station timer for a subscriber station corresponding to a channel on which the subscriber station is operable to communicate; and
a base station ranging module coupled to the base station timers, the base station ranging module operable to assign a transmission opportunity for the subscriber station on a specified channel when the base station timer for the specified channel expires.

16. The base station as set forth in Claim 15, the base station ranging module comprising:
a ranging controller operable to determine whether a transmission has been received from the subscriber station on the specified channel; and
a channel condition evaluator coupled to the ranging controller, the channel condition evaluator operable to evaluate a channel condition of the specified channel to determine whether the channel condition is acceptable.

17. The base station as set forth in Claim 16 , the ranging controller further operable to reset the base station timer for the specified channel when the channel condition is acceptable.

18. The base station as set forth in Claim 16 , the ranging controller further operable to transmit a ranging response message to the subscriber station when the channel condition is unacceptable.

19. The base station as set forth in Claim 18 , the ranging controller further operable to reset a length of the base station timer for the specified channel from a normal timer length to an urgent timer length when the channel condition is unacceptable.

20. The base station as set forth in Claim 16 , the base station ranging module further comprising a timer length assigner coupled to the ranging controller, the timer length assigner operable to assign a normal timer length and an urgent timer length to each base station timer based on a pattern for frequency hopping for the corresponding subscriber station.

21. The base station as set forth in Claim 16 , the base station ranging module further comprising a timer length assigner coupled to the ranging controller, the timer length assigner operable to assign, for each subscriber station, a timer length for each of a plurality of subscriber station timers, the subscriber station timers maintained by the corresponding subscriber station, each channel on which the corresponding subscriber station is operable to communicate having an associated subscriber station timer.

22. The base station as set forth in Claim 21 , the timer length assigner further operable to assign the timer length for each of the subscriber station timers for a corresponding subscriber station based on a collision probability for the corresponding subscriber station.

23. The base station as set forth in Claim 15, the channel element further operable to obtaining or updating a frequency hopping pattern after channel sensing.

24. A subscriber station for ranging in a multiple channel communication system, comprising:
a subscriber station timer for each channel on which the subscriber station is operable to communicate; and
a subscriber station ranging module for determining whether the subscriber station timer for one of the channels has expired and for transmitting a re-initialization ranging request to a base station for the specified channel, when the subscriber station timer for a specified channel has expired.

25. The subscriber station as set forth in Claim 24, whereinthe subscriber station ranging module further is operable to determine whether a transmission opportunity has been assigned to the subscriber station for one of the channels, and when the transmission opportunity has been assigned to the subscriber station for a specified channel, to transmit a periodic ranging message to the base station on the specified channel and to reset the subscriber station timer for the specified channel.

26. The subscriber station as set forth in Claim 24, whereinthe subscriber station ranging module further is operable to determine whether the subscriber station has data to transmit to the base station on one of the channels, and ,when the subscriber station has data to transmit to the base station on a specified channel, to transmit data to the base station on the specified channel and resetting the subscriber station timer for the specified channel.

27. The subscriber station as set forth in Claim 24, whereinthe subscriber station ranging module further is operable to determine whether a ranging response message has been received from the base station for one of the channels, to adjust, when the ranging response message has been received from the base station for a specified channel, parameters for the specified channel based on the ranging response message, to transmit a periodic ranging message to the base station on the specified channel, and toreset the subscriber station timer for the specified channel.

28. The subscriber station as set forth in Claim 24, further comprising a RF Transceiver to perform a channel sensing for obtaining or updating a frequency hopping pattern.
